# EUROPEAN PATENT APPLICATION

(11) **EP 3 858 597 A1**
(43) Date of publication of application: **04.08.2021**
(21) Application number: 20154805.4
(22) Date of filing: 31.01.2020
(51) Int. Cl.: B32B 5/02, B32B 7/06, B32B 7/12, B32B 9/00, B32B 9/04, B32B 27/12, B32B 27/32, E04F 15/18

(54) **EASILY REMOVABLE TILE BASED FLOOR COVERING SYSTEM**

(71) Applicant: SAINT-GOBAIN WEBER, 94370 Sucy-en-Brie (FR)
(72) Inventor: HÖRNER, Alfred, 77694 KEHL (DE); REISCH, Bruno, 76530 BADEN-BADEN (DE)
(74) Representative: Saint-Gobain Recherche

(57) **Abstract**

The present invention relates to an easily removable floor covering system (12) comprising the following layers:
- a first adhesive layer (2) in contact with the underground (1),
- a decoupling mat layer (3) adhered to the underground by means of the first adhesive layer (2),
- a second adhesive layer (4) made of a mortar-based tile adhesive, and
- a tile layer (5) made of ceramic tiles or stone tiles,
the floor covering system being characterized in that the first adhesive layer (2), located between the underground (1) and the decoupling mat layer, is a dispersion polymer-based adhesive layer.

It also relates to a method for covering an underground with such a ceramic tile or stone tile floor covering system, and to a method for dismantling such a floor covering system.

## Description

The present invention relates to a tile-based floor covering system that is easy to remove from its underground, a method for covering an underground with said system, and a method for dismantling said tile-based floor covering system from the underground.

Ceramic tile or stone tile based floor covering systems are used for centuries in all kinds of places, in interior or exterior use, for their high mechanical resistance and durability. They are firmly attached to the underground, generally made of concrete or stone, by means of tile adhesives based on hydraulic binders, especially on mortar.

It is further known for decades to use flexible, generally fiber based structures as "uncoupling" or "decoupling" layers between the tile layer and the underground, the term "uncoupling" or "decoupling" referring to the interruption or reduction of sound propagation and/or to the suppression of cracks resulting from differences in the coefficient of thermal expansion between the substrate and the tile layer.

The uncoupling layers are generally fiber based, woven and/or non-woven fabrics that are adhered to the underground by means of a first mortar-based adhesive, the stone or ceramic tiles then being glued to the uncoupling layer by means of a second mortar-based adhesive (see for example EP 2071246).

The main inconvenient of ceramic or stone tile floor coverings is that dismantling thereof requires a lot of mechanical force and effort, generally resulting in complete destruction of the tiles. The hardened mortar based adhesive is very hard to remove from the underground without causing severe damages thereto. It is generally necessary to apply a fresh screed to level the substrate so that it may receive a new floor covering.

For the above reasons, polymer-based or wood-based floor coverings are generally preferred over stone tiles or ceramic tiles in temporary buildings, such as trade fair constructions or exhibition halls, or in places where the floor covering is frequently replaced for commercial or decorative reasons, such as in supermarkets or residential locations. However, in cases where the floor must resist heavy loads hard, tile-based coverings are often the only type of floor covering to be considered.

So there is an ongoing need for a ceramic or stone tile-based flooring that is easy to remove by simply pulling it off the substrate, leaving a plane, clean exposed underground and thereby dispensing with the need of fastidious preparation or applying of a fresh screed before application of a new floor covering.

This need is met by the floor covering system of the present invention such as defined in claim 1, by a method for covering an underground with such a ceramic tile or stone tile floor covering system as defined in claim 9 and by a method of dismantling such a floor covering system in claim 14.

The present invention is based on the use of a dispersion polymer, in particular a polyacrylate dispersion polymer for gluing a decoupling mat to the underground, the tile layer then being adhered to the decoupling mat by means of a mortar-based tile adhesive.

The floor covering system of the present invention thus comprises the following layers:
- a first adhesive layer in contact with the underground,
- a decoupling mat layer adhered to the underground by means of the first adhesive layer,
- a second adhesive layer made of a mortar-based tile adhesive, and
- a tile layer made of ceramic tiles or stone tiles,
with the first adhesive layer, located between the underground and the decoupling mat layer, being a dispersion polymer-based adhesive layer.

The dispersion polymer-based adhesive layer results from the application of an aqueous dispersion of an organic polymer. The dispersion polymer preferably is a polyacrylate-based dispersion polymer, i.e. an organic polymer resulting from the emulsion polymerization or dispersion polymerization of acrylate monomers, optionally in combination with non-acrylate comonomers. The acrylate monomers encompass (meth)acrylic acid, esters of (meth)acrylic acid and salts of (meth)acrylic acid. Non-acrylic comonomers encompass for example styrenic comonomers and vinyle comonomers.

Any acrylate-based latex currently used as adhesive for textile floor coverings or polymer based floor coverings, or as tackyfying floor finishes for loosely laid floorings may be used as adhesive for forming the polyacrylate-based adhesive layer. Good results may be obtained for example with the products UZIN Multilift (Uzin), weber.floor 4870 and weberbond grip (Saint-Gobain Weber).

The polyacrylate-based aqueous dispersion adhesive preferably is *not* in pasty form (to be applied with a toothed spatula) but has a liquid consistency so that it may advantageously be applied by means of a foam roller or of a fiber roller. After drying of the aqueous dispersion adhesive, the polyacrylate-based first adhesive layer has a surface weight of between 10 and 100 g/m², preferably between 15 and 80 g/m², more preferably between 20 and 60 g/m².

A decoupling mat is then applied to the still wet adhesive layer before complete drying thereof. Any "decoupling" or "uncoupling" structure or system conventionally used as an underlayer for stone tiles or ceramic tiles in order to prevent sound propagation/transmission or to reduce stress due to the difference of coefficient of thermal expansion may be used in the present invention.

The decoupling structure is preferably a non-woven mat, also called fleece, made of natural or synthetic fibers, preferably synthetic polymer fibers such as polyolefin fibers or polyester fibers.

In another advantageous embodiment, the decoupling structure comprises a fleece, laminated with a polymer film.

The inventors have successfully used a laminate comprising a polyolefin film laminated between two polypropylene fleeces, such as the products weber.tec 825 and weber.tec 826 (Saint-Gobain Weber).

The thickness of the decoupling mat generally does not exceed a few millimeters and is comprised preferably between 0.5 and 5.0 mm, preferably between 0.5 and 3.0 mm. Its surface weight is generally comprised between 100 and 300 g/m². The adhesive composition used for adhering the tiles to the decoupling mat may be any conventional mortar-based tile adhesive currently used to fix stone tiles or ceramic tiles to a substrate.

The Applicants however have observed that surprisingly, when the floor covering systems of the present invention was used in locations where is was submitted to heavy loads such as for example heavily loaded vehicles, construction machines or high shelves loaded with goods, a conventional mortar-based tile adhesive could be destroyed after some time, resulting in loosening and/or breakage of the tiles.

This specific problem has been solved by the use of a special, highly flexible and highly resilient tile adhesive. In a preferred embodiment of the present invention, the mortar-based tile adhesive of the second adhesive layer, applied over the compressible decoupling mat, is a polymer-modified mortar. Particularly suitable polymer-modified mortar-based adhesive compositions are described in the international application WO 2016/097371 in the name of the Applicant, which is incorporated by reference herein. These polymer-modified mortars comprise a cementitious phase, rubber particles and a polymeric phase resulting from a (meth)acrylic dispersion polymer. They result from the hardening of a bicomponent reactive system obtained by mixing an aqueous polymer dispersion (first component) with a second component comprising an alkaline hydraulic binder, rubber particles and a low molecular weight carboxy- and amino-functional reactive (hexamethylenediamine diadipate).

The mortar-based tile adhesive is generally applied in an amount of between 2.0 and 6.0 kg/m², preferably between 2.5 and 4.0 kg/m².

The wet second adhesive layer, before complete drying thereof, is then covered with ceramic tiles or stone tiles, thereby forming a tile layer. After hardening and drying of the underlying mortar-based tile adhesive layer, the joints between adjacent tiles are preferably filled with a suitable grout composition and left to dry.

As explained above, the objective of the present invention is to provide a floor covering system that is easy to dismantle and recycle, leaving a clean underground that does not require any additional processing or preparation before the laying of a new flooring. The dismantling of the floor system of the present invention is carried out by seizing an edge of the decoupling mat and pulling it away from the ground, thereby peeling off the decoupling mat, the mortar based second adhesive layer, the tiles and part of the first adhesive layer, leaving only part of the rather thin first adhesive layer on the ground. It is then generally possible to remove the residual dispersion polymer layer by simply washing the exposed underground.

In a preferred embodiment of the flooring system of the present invention, the second adhesive layer and the ceramic tiles or stone tiles are applied so as to not completely cover the decoupling mat, leaving a peripheral part thereof, preferably a peripheral strip thereof, extend beyond the tile layer.

This makes it easy to seize the decoupling mat without the need of first taking out a tile, a task that would require a special tool.

The peripheral part extending beyond the tile layer may be applied against the wall adjacent to the underground. A baseboard is then preferably applied against the wall to cover the part of the decoupling mat extending beyond the tile layer.

In another embodiment of the flooring system, the peripheral part extending beyond the tile layer is located in a joint between the tile layer and the wall adjacent to the underground. In other word, the second adhesive layer and the ceramic tiles or stone tiles are applied so as to not completely reach the wall and to leave a gap or joint between the tile layer and the wall. This joint should be large enough to allow easy seizure of the decoupling mat. Its width should be for example comprised between about 1 and 8 cm, preferably between 2 and 6 cm.

The joint between the tile layer and the wall may then advantageously be filled with a removable joint profile to cover the part of the decoupling mat extending beyond the tile layer, and hiding it from the view.

The method of dismantling the floor covering system then comprises uncovering the edge of the decoupling mat by simply removing the baseboard or the joint profile, and peeling off the floor covering system from the underground. The tiles still adhering to the decoupling mat may then be separated from the decoupling mat. This latter step may however be rather fastidious when there is a strong bond between the tiles and the hardened mortar-based tile adhesive.

The present invention is hereafter explained in more detail with reference to the figures where
Figure 1 depicts a first embodiment of the edge part of the floor covering system of the present invention, and
Figure 2 depicts a second embodiment of the edge part of the floor covering system of the present invention.

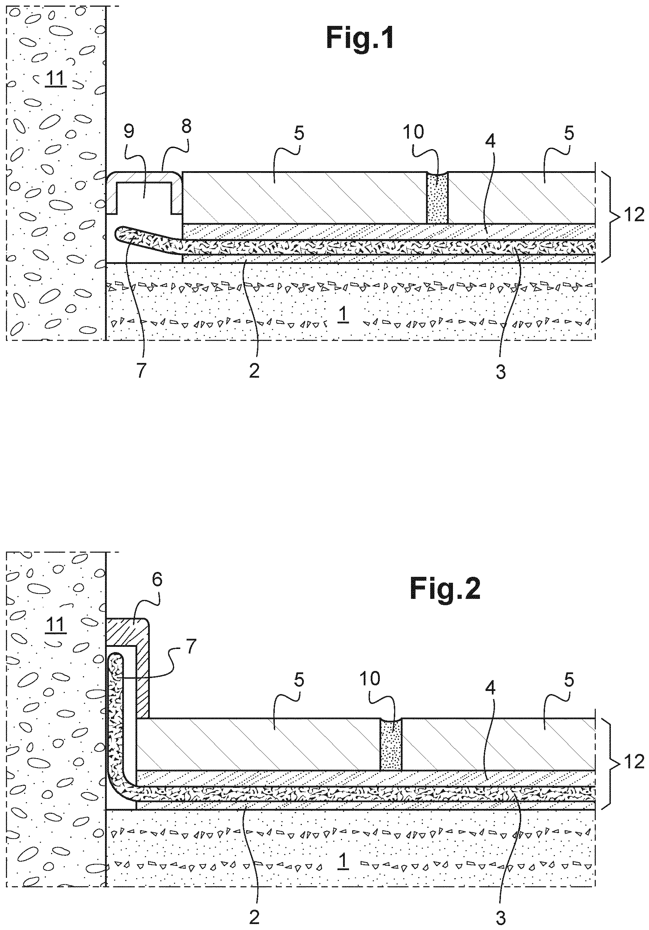

In Figure 1 the floor covering system 12 is installed on a concrete substrate or underground 1 adjacent to a wall 11. A first polyacrylate-based adhesive layer 2 is in contact with the underground 1 and with an overlying decoupling mat 3. The first adhesive layer is not present under the peripheral zone of the decoupling mat 3, near the wall, so that part 7 of the decoupling mat is free and not bonded to the underground. A second adhesive layer 4 is applied on the decoupling mat 3. This second adhesive layer 4 is based on a hydraulic binder, in particular mortar, and is thicker than the first adhesive layer 2. The second adhesive layer does not cover the part 7 of the decoupling mat 3 that extends beyond the first adhesive layer 2. Ceramic or stone tiles 5 are bonded to the second, mortar-based adhesive layer 4. The joint 10 between adjacent tiles is filled with tile grout. A gap or joint 9 separates the wall 11 from the tile 5 next to it. This joint is closed by means of a removable joint profile 8.

The floor covering system 12 of Figure 2 comprises the same elements as the one of Figure 1, i.e. a first polyacrylate-based adhesive layer 2, a decoupling mat 3, a second, mortar-based adhesive layer 4 and a tile layer made of ceramic tiles or stone tiles 5 and joints 10 filled with tile grout. The main difference of the embodiment shown at Figure 2 with respect to Figure 1, is that the free part 7 of the decoupling mat 3 extends vertically out from under the tile layer 5 and is applied against the wall 11. A hollow baseboard 6 hiding the free end 7 of the decoupling layer is affixed to wall 11.

## Claims

1. An easily removable floor covering system (12) comprising the following layers:
- a first adhesive layer (2) in contact with the underground (1),
- a decoupling mat layer (3) adhered to the underground by means of the first adhesive layer (2),
- a second adhesive layer (4) made of a mortar-based tile adhesive, and
- a tile layer (5) made of ceramic tiles or stone tiles,
the floor covering system being **characterized in that** the first adhesive layer (2), located between the underground (1) and the decoupling mat layer, is a dispersion polymer-based adhesive layer.

2. The floor covering system according to claim 1, wherein the dispersion polymer-based adhesive layer is a polyacrylate-based adhesive layer.

3. The floor covering system according to claim 1 or 2, wherein the mortar-based tile adhesive of the second adhesive layer is a polymer-modified mortar.

4. The floor covering system according to claim 3, wherein the polymer-modified mortar of the second adhesive layer comprises a cementitious phase, rubber particles and a polymeric phase resulting from a (meth)acrylic dispersion polymer.

5. The floor covering system according to any of claims 1 to 4, wherein the decoupling mat (3) is or comprises a fleece made of synthetic polymer fibers, optionally laminated with a polymer film.

6. The floor covering system according to any of claims 1 to 5, wherein the decoupling mat is laminate comprising a polyolefin film laminated between two polypropylene fleeces.

7. The floor covering system according to any of claims 1 to 6, wherein the decoupling mat (3) juts out beyond the area covered by the tile layer (5), the part (7) of the decoupling mat extending beyond the tile layer preferably being a strip located at the periphery of the tile layer.

8. The floor covering system according to claim 7, further comprising a baseboard (6) covering the part (7) of the decoupling mat extending beyond the tile layer, or a removable joint profile (8) covering the part (7) of the decoupling mat extending beyond the tile layer.

9. The floor covering system according to any of claims 1 to 8 wherein the polyacrylate-based first adhesive layer (2) has a surface weight of between 10 and 100 g/m², preferably between 15 and 80 g/m², more preferably between 20 and 60 g/m².

10. A method for covering an underground (1) with a ceramic tile or stone tile floor covering system according to any of claims 1 to 9, comprising the following successive steps:
- applying an aqueous dispersion adhesive, preferably a polyacrylate-based aqueous dispersion adhesive, on the underground (1) to be covered with tiles, thereby forming a wet first adhesive layer (2),
- applying a decoupling mat (3) onto the wet first adhesive layer (2) before complete drying thereof,
- applying a polymer-modified mortar-based tile adhesive onto the decoupling mat (3), thereby forming a wet second adhesive layer (4), and
- covering the wet second adhesive layer (4), before complete drying thereof, with ceramic tiles or stone tiles, thereby forming a tile layer (5).

11. The method according to claim 10, wherein the aqueous dispersion adhesive is applied by means of a foam roller or fiber roller.

12. The method according to any of claims 10 to 11, wherein the second adhesive layer (4) and the ceramic tiles or stone tiles are applied so as to not completely cover the decoupling mat (3), leaving a peripheral part (7) thereof, preferably a peripheral strip thereof, extend beyond the tile layer (5).

13. The method according to claim 12, wherein the peripheral part (7) extending beyond the tile layer (5) is applied against the wall (11) adjacent to the underground, and wherein the method further comprises applying a baseboard (6) against said wall thereby covering the part of the decoupling mat extending beyond the tile layer (5).

14. The method according to claim 12, wherein the peripheral part (7) extending beyond the tile layer (5) is located in a joint (9) between the tile layer and the wall (11) adjacent to the underground (1), and wherein the method further comprises filling the joint (9) with a removable joint profile (8) thereby covering the part (7) of the decoupling mat extending beyond the tile layer (5).

15. A method of dismantling a floor covering system according to any of claims 1 to 9, comprising
- uncovering a zone of the decoupling mat, preferably located at the periphery of the tile layer,
- peeling off the floor covering system from the underground, and, optionally
- separating/peeling the tiles from the decoupling mat.
